# EUROPEAN PATENT APPLICATION

(11) **EP 4 064 624 A1**
(43) Date of publication of application: **28.09.2022**
(21) Application number: 20907508.4
(22) Date of filing: 29.09.2020
(51) Int. Cl.: H04L 12/723

(54) **TUNNEL SEGMENTATION METHOD AND APPARATUS, AND DATA TRANSMISSION SYSTEM**

(30) Priority: 27.12.2019 CN 201911381741
(71) Applicant: Huawei Technologies Co., Ltd., Shenzhen, Guangdong 518129 (CN)
(72) Inventor: YIN, Mingliang, Shenzhen, Guangdong 518129 (CN); MEI, Xiaoling, Shenzhen, Guangdong 518129 (CN)
(74) Representative: Grünecker Patent- und Rechtsanwälte PartG mbB
(86) International application number: PCT/CN2020/119052
(87) International publication number: WO 2021/129029

(57) **Abstract**

This application discloses a tunnel segmentation method and apparatus, and a data transmission system, and belongs to the communications field. The tunnel segmentation method includes: determining a segment tail node in a data transmission tunnel, where the data transmission tunnel includes i nodes, the segment tail node is a j^{th} node in the data transmission tunnel, and 3 ≤ j ≤ i; searching the data transmission tunnel for a target tunnel segment corresponding to the segment tail node, where a tail node of the target tunnel segment is the segment tail node, and a hop count of the target tunnel segment is determined based on an MSD of a head node of the target tunnel segment; and segmenting the data transmission tunnel based on the target tunnel segment corresponding to the segment tail node. This application resolves a current problem that a head node may be unable to forward data based on a label stack delivered by a controller, and improves an effect of tunnel segmentation. This application is used to segment a tunnel.

## Description

This application claims priority to Chinese Patent Application No. 201911381741.8, filed on December 27, 2019 and entitled "TUNNEL SEGMENTATION METHOD AND APPARATUS, AND DATA TRANSMISSION SYSTEM", which is incorporated herein by reference in its entirety.

### TECHNICAL FIELD

This application relates to the communications field, and in particular, to a tunnel segmentation method and apparatus, and a data transmission system.

### BACKGROUND

A data transmission system using segment routing (segment routing, SR) usually includes a controller and a plurality of nodes, and the controller can plan a data transmission tunnel based on the plurality of nodes. The controller may further divide the data transmission tunnel into a plurality of tunnel segments, and deliver a label stack (including labels of nodes in each tunnel segment) to a head node of the tunnel segment based on the labels and a sequence of the nodes. Then, after receiving data, the head node of each tunnel segment may forward the data based on the label stack delivered by the controller.

In a related technology, the controller may divide the data transmission tunnel into a plurality of tunnel segments based on a fixed node quantity. In addition, in the plurality of tunnel segments, a quantity of nodes in any tunnel segment other than the last tunnel segment is the fixed node quantity, and a quantity of nodes in the last tunnel segment is less than or equal to the fixed node quantity.

However, the node in the data transmission system can support a limited maximum length of a label stack, and the maximum length may be represented by a maximum segment identifier depth (maximum segment identity document depth, MSD). After the controller delivers the label stack to the head node of the tunnel segment, the head node may be unable to support a length of the label stack. Consequently, the head node cannot forward the data based on the label stack delivered by the controller.

### SUMMARY

This application provides a tunnel segmentation method and apparatus, and a data transmission system, to resolve a current problem that a head node may be unable to forward data based on a label stack delivered by a controller. The technical solutions are as follows.

According to a first aspect, a tunnel segmentation method is provided. The method includes: determining a segment tail node in a data transmission tunnel, where the data transmission tunnel includes i nodes, the segment tail node is a j^{th} node in the data transmission tunnel, and 3 ≤ j ≤ i; searching the data transmission tunnel for a target tunnel segment corresponding to the segment tail node, where a tail node of the target tunnel segment is the segment tail node, and a hop count of the target tunnel segment is determined based on a maximum segment identifier depth MSD of a head node of the target tunnel segment; and segmenting the data transmission tunnel based on the target tunnel segment corresponding to the segment tail node.

It should be noted that, the segment tail node in the data transmission tunnel may be first determined, then the data transmission tunnel is searched for the target tunnel segment corresponding to the segment tail node, and the data transmission tunnel is segmented based on the target tunnel segment corresponding to the segment tail node. Because the hop count of the target tunnel segment is determined based on the MSD of the head node of the target tunnel segment, it is ensured that the head node of the target tunnel segment can support a length of a label stack corresponding to the tunnel segment, thereby improving an effect of tunnel segmentation.

Optionally, the hop count of the target tunnel segment is less than or equal to a difference between the MSD of the head node of the target tunnel segment and 1. A controller may obtain an MSD of each node in the data transmission system by using a BGP-LS. Optionally, the hop count of the target tunnel segment may be less than or equal to a difference between the MSD of the head node of the target tunnel segment and another value, and this is not limited in this embodiment of this application. However, the another value needs to be less than the MSD of the head node of the target tunnel segment.

Optionally, the determining a segment tail node in a data transmission tunnel includes: determining a tail node of the data transmission tunnel as the segment tail node.

In this embodiment of this application, there are a plurality of implementations in which the controller determines the target tunnel segment by using the MSD. The following uses two implementations as examples for description.

In one implementation, the searching the data transmission tunnel for a target tunnel segment corresponding to the segment tail node includes: searching the data transmission tunnel for at least one candidate tunnel segment corresponding to the segment tail node, where a tail node of the candidate tunnel segment is the segment tail node, and a hop count of the candidate tunnel segment is determined based on an MSD of a head node of the candidate tunnel segment; and then determining that a candidate tunnel segment with a largest hop count in the at least one candidate tunnel segment is the target tunnel segment corresponding to the segment tail node. Optionally, the hop count of the candidate tunnel segment is less than or equal to a difference between the MSD of the head node of the candidate tunnel segment and 1.

For example, the controller may compare a hop count between the segment tail node and each upstream node of the segment tail node with an MSD of the upstream node, then select, based on comparison results, a path that meets the condition of the candidate tunnel segment from paths between the segment tail node and the plurality of upstream nodes, and determine the path as the candidate tunnel segment.

In the other implementation, the controller may not need to search for the at least one candidate tunnel segment, but directly search an upstream node of the segment tail node for a segment head node of the target tunnel segment based on a condition that the segment head node needs to meet. Once the segment head node is found, a path between the segment head node and the segment tail node is determined as the target tunnel segment. A hop count between the segment head node and the segment tail node is determined based on an MSD of the segment head node.

For example, the controller may successively determine, in ascending or descending order of hop counts between upstream nodes of the segment tail node and the segment tail node, whether each upstream node is the segment head node. Alternatively, the controller may successively determine, in a random order, whether an upstream node of the segment tail node is the segment head node.

Optionally, after the searching the data transmission tunnel for a target tunnel segment corresponding to the segment tail node, the method further includes: when a head node of a newly determined target tunnel segment is not a head node of the data transmission tunnel, repeatedly performing steps of using the head node of the newly determined target tunnel segment as an updated segment tail node and searching the data transmission tunnel for a target tunnel segment corresponding to the updated segment tail node. The segmenting the data transmission tunnel based on the target tunnel segment corresponding to the segment tail node includes: segmenting the data transmission tunnel based on the found target tunnel segment.

For example, the controller may compare the head node of the newly determined target tunnel segment with the head node of the data transmission tunnel, to determine whether the head node of the newly determined target tunnel segment is the head node of the data transmission tunnel. When the head node of the newly determined target tunnel segment is not the head node of the data transmission tunnel, it indicates that in the data transmission tunnel, there is still a node located outside the determined target tunnel segment. In this case, the steps of using the head node of the newly determined target tunnel segment as an updated segment tail node and searching the data transmission tunnel for a target tunnel segment corresponding to the updated segment tail node may be repeatedly performed. When the head node of the newly determined target tunnel segment is the head node of the data transmission tunnel, it indicates that each node between the initially determined segment tail node and the head node of the data transmission tunnel is located in the determined target tunnel segment. In this case, the data transmission tunnel may be segmented based on the found target tunnel segment.

Optionally, before the determining a segment tail node in a data transmission tunnel, the method further includes: searching the data transmission tunnel for an auxiliary tunnel segment corresponding to an auxiliary node, where the auxiliary node is a k^{th} node in the data transmission tunnel, 1 ≤ k < i, a head node of the auxiliary tunnel segment is the auxiliary node, and a hop count of the auxiliary tunnel segment is determined based on an MSD of the auxiliary node; and when the auxiliary tunnel segment corresponding to the auxiliary node is found, if a tail node of a newly found auxiliary tunnel segment is not the tail node of the data transmission tunnel, repeatedly performing steps of using the tail node of the newly determined auxiliary tunnel segment as an updated auxiliary node and searching the data transmission tunnel for an auxiliary tunnel segment corresponding to the updated auxiliary node. The determining a segment tail node in a data transmission tunnel includes: when no auxiliary tunnel segment corresponding to the auxiliary node is found, determining the segment tail node from a downstream node of the auxiliary node in the data transmission tunnel; and when no auxiliary tunnel segment corresponding to any updated auxiliary node is found, determining the segment tail node from a downstream node of any updated auxiliary node in the data transmission tunnel.

It may be learned that the controller may first search the data transmission tunnel for at least one auxiliary tunnel segment in an order from the head node to the tail node of the data transmission tunnel. When an MSD of a tail node of an auxiliary tunnel segment is equal to 0 or 1, the controller may then search the data transmission tunnel for at least one target tunnel segment in an order from the tail node to the head node of the data transmission tunnel.

Optionally, the hop count of the auxiliary tunnel segment is less than or equal to a difference between the MSD of the auxiliary node and 1. Optionally, the hop count of the target tunnel segment may be less than or equal to a difference between the MSD of the auxiliary node and another value, and this is not limited in this embodiment of this application. However, the another value needs to be less than the MSD of the auxiliary node.

For example, if the controller finds, in the data transmission tunnel, a plurality of auxiliary tunnel segments corresponding to the auxiliary node, the controller may use an auxiliary tunnel segment with a largest hop count as the auxiliary tunnel segment corresponding to the auxiliary node. Each time the controller finds an auxiliary tunnel segment, the controller needs to check whether a tail node of the auxiliary tunnel segment is the tail node of the data transmission tunnel. If the tail node of the auxiliary tunnel segment is not the tail node of the data transmission tunnel, the controller may repeatedly perform the steps of using the tail node of the newly determined auxiliary tunnel segment as an updated auxiliary node and searching the data transmission tunnel for an auxiliary tunnel segment corresponding to the updated auxiliary node.

Optionally, after the searching the data transmission tunnel for a target tunnel segment corresponding to the segment tail node, the method further includes: when at least one auxiliary tunnel segment exists in the data transmission tunnel, if a head node of a newly determined target tunnel segment is located outside the at least one auxiliary tunnel segment, repeatedly performing steps of using the head node of the newly determined target tunnel segment as an updated segment tail node and searching the data transmission tunnel for a target tunnel segment corresponding to the updated segment tail node; or when the head node of the newly determined target tunnel segment is located in any auxiliary tunnel segment, if the head node of the newly determined target tunnel segment is not a head node or a tail node of the any auxiliary tunnel segment, searching the data transmission tunnel for a reference tunnel segment. A head node of the reference tunnel segment is the head node of the any auxiliary tunnel segment, and a tail node of the reference tunnel segment is the head node of the newly determined target tunnel segment. The segmenting the data transmission tunnel based on the target tunnel segment corresponding to the segment tail node includes: when the reference tunnel segment is found, segmenting the data transmission tunnel based on the found target tunnel segment, reference tunnel segment, and auxiliary tunnel segment preceding the reference tunnel segment.

Each time the controller finds a target tunnel segment, if at least one auxiliary tunnel segment exists in the data transmission tunnel, the controller needs to check whether a head node of the target tunnel segment is located in the at least one auxiliary tunnel segment.

Optionally, the segmenting the data transmission tunnel based on the target tunnel segment corresponding to the segment tail node further includes: when the head node of the newly determined target tunnel segment is located in the any auxiliary tunnel segment and the head node of the newly determined target tunnel segment is the head node of the any auxiliary tunnel segment, segmenting the data transmission tunnel based on the found target tunnel segment and auxiliary tunnel segment preceding the target tunnel segment; or when the head node of the newly determined target tunnel segment is located in the any auxiliary tunnel segment and the head node of the newly determined target tunnel segment is the tail node of the any auxiliary tunnel segment, segmenting the data transmission tunnel based on the found target tunnel segment and auxiliary tunnel segment.

Optionally, after the searching the data transmission tunnel for a target tunnel segment corresponding to the segment tail node, the method further includes: when no auxiliary tunnel segment exists in the data transmission tunnel, if the head node of the newly determined target tunnel segment is not the head node of the data transmission tunnel, repeatedly performing the steps of using the head node of the newly determined target tunnel segment as an updated segment tail node and searching the data transmission tunnel for a target tunnel segment corresponding to the updated segment tail node. The segmenting the data transmission tunnel based on the target tunnel segment corresponding to the segment tail node includes: segmenting the data transmission tunnel based on the found target tunnel segment.

According to a second aspect, a tunnel segmentation apparatus is provided. The tunnel segmentation apparatus includes modules configured to implement the tunnel segmentation method provided in the first aspect.

According to a third aspect, a tunnel segmentation apparatus is provided. The tunnel segmentation apparatus includes a processor and a memory. The memory stores a program. The processor is configured to execute the program stored in the memory, to implement the tunnel segmentation method according to the first aspect.

According to a fourth aspect, a computer storage medium is provided. The storage medium stores a computer program. When the computer program is executed by a processor, the tunnel segmentation method according to the first aspect is implemented.

According to a fifth aspect, a computer program product including instructions is provided. When the computer program product is run on a computer, the computer is enabled to perform the tunnel segmentation method according to the first aspect.

According to a sixth aspect, a data transmission system is provided. The data transmission system includes a controller and a plurality of nodes. The controller includes the tunnel segmentation apparatus according to the second or third aspect.

### BRIEF DESCRIPTION OF DRAWINGS

FIG. 1 is a schematic diagram of a structure of a data transmission system according to an embodiment of this application;
FIG. 2 is a schematic diagram of a data transmission tunnel according to an embodiment of this application;
FIG. 3 is a flowchart of a tunnel segmentation method according to an embodiment of this application;
FIG. 4 is a schematic diagram of a type of segmentation of a data transmission tunnel according to an embodiment of this application;
FIG. 5 is a flowchart of another tunnel segmentation method according to an embodiment of this application;
FIG. 6 is a schematic diagram of another type of segmentation of a data transmission tunnel according to an embodiment of this application;
FIG. 7 is a block diagram of a tunnel segmentation apparatus according to an embodiment of this application;
FIG. 8 is a block diagram of another tunnel segmentation apparatus according to an embodiment of this application; and
FIG. 9 is a schematic diagram of a structure of a tunnel segmentation apparatus according to an embodiment of this application.

### DESCRIPTION OF EMBODIMENTS

To make objectives, technical solutions, and advantages of this application clearer, the following further describes implementations of this application in detail with reference to the accompanying drawings.

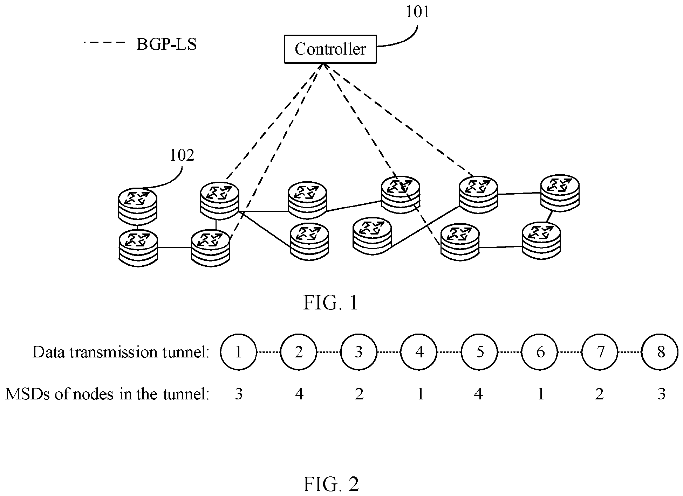

An embodiment of this application provides a data transmission system. As shown in FIG. 1, the data transmission system may include a controller 101 and a plurality of nodes 102. A communications connection is established between the plurality of nodes 102. The controller 101 may establish a communications connection with at least some of the plurality of nodes 102 (an example in which the controller 101 establishes a communications connection with some nodes 102 is used in FIG. 1). The communications connection may be referred to as a border gateway protocol link state (border gateway protocol link state, BGP-LS). Further, the data transmission system may include a transmit end (not shown in FIG. 1) and a receive end (not shown in FIG. 1). It should be noted that quantities of nodes 102, transmit ends, and receive ends are not limited in this embodiment of this application. An example in which a data transmission system includes 12 nodes 102 is used in FIG. 1 for description.

For example, the controller 101 may be referred to as a network cloud engine internet protocol (network cloud engine internet protocol, NCE-IP) controller, and the controller 101 may be a server or a server cluster including a plurality of servers. The node 102 may be referred to as a forwarding node, a forwarding device, or the like. The node 102 may be a device configured to forward data, for example, a switch or a router. Both the transmit end and the receiver end may be terminals such as a mobile phone or a computer.

Both the controller 101 and the node 102 may be devices using a segment routing (segment routing, SR) technology. The controller 101 can plan a data transmission tunnel based on topology information of the plurality of nodes 102. Then, after receiving data sent by the transmit end, the node 102 in the data transmission tunnel may transmit the data to the receive end based on the tunnel preplanned by the controller 101. When planning the data transmission tunnel, the controller 101 may determine the data transmission tunnel based on a CSPF algorithm. For example, a tunnel with a minimum cost may be obtained through calculation based on a service level agreement (service level agreement, SLA) constraint. In addition, the controller 101 may further divide the planned data transmission tunnel into a plurality of tunnel segments, and deliver a label stack (including labels of nodes in each tunnel segment) to a head node of the tunnel segment based on the labels and a sequence of the nodes. Then, after receiving data, the head node of each tunnel segment may forward the data based on the label stack delivered by the controller.

In this embodiment of this application, the plurality of nodes in the data transmission system may belong to a same domain (also referred to as a network domain), or may belong to different domains. Correspondingly, the data transmission tunnel planned by the controller 101 may be a tunnel in a same domain, or may be a data transmission tunnel belonging to different domains. For example, the foregoing domain may be an interior gateway protocol (interior gateway protocol, IGP) domain or an autonomous system (autonomous system, AS) domain. This is not limited in this embodiment of this application.

In a related technology, the controller may divide the data transmission tunnel into a plurality of tunnel segments based on a fixed node quantity. In addition, in the plurality of tunnel segments, a quantity of nodes in any tunnel segment other than the last tunnel segment is the fixed node quantity, and a quantity of nodes in the last tunnel segment is less than or equal to the fixed node quantity.

However, as the data transmission system is growing larger, increasingly more nodes exist in the data transmission tunnel planned by the controller, and the label stack delivered by the controller to the head node becomes increasingly long. However, the node in the data transmission system can support a limited maximum length of a label stack, and the maximum length may be represented by an MSD. After the controller delivers the label stack to the head node of the tunnel segment, the head node may be unable to support a length of the label stack. Consequently, the head node cannot forward the data based on the label stack delivered by the controller.

An embodiment of this application provides a tunnel segmentation method. The method may be applied to a controller in a data transmission system, for example, may be applied to the controller 101 shown in FIG. 1. The following embodiments are described by using an example in which a data transmission tunnel planned by the controller includes a node 1 to a node 8 shown in FIG. 2, and MSDs of the node 1 to the node 8 are 3, 4, 2, 1, 4, 1, 2, and 3 respectively. The node 1 to the node 8 may be any eight nodes in the data transmission system shown in FIG. 1. For a segmentation process of another data transmission tunnel planned by the controller, refer to the following embodiments. Details are not described herein in this embodiment of this application.

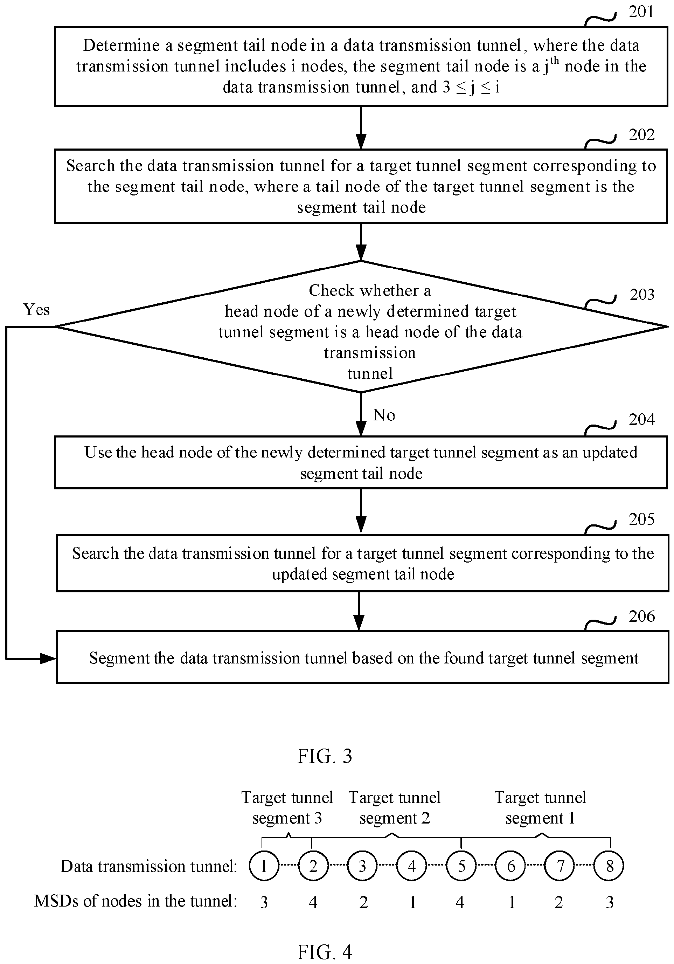

For example, referring to FIG. 3, the tunnel segmentation method may include the following steps.

Step 201: Determine a segment tail node in a data transmission tunnel, where the data transmission tunnel includes i nodes, the segment tail node is a j^{th} node in the data transmission tunnel, and 3 ≤ j ≤ i. Perform step 202.

For example, as shown in FIG. 2, the data transmission tunnel includes the node 1 to the node 8, where i = 8. Because 3 ≤j ≤ i, the segment tail node may be the node 3, the node 4, the node 5, ..., or the node 8 in the data transmission tunnel. The following embodiment is described by using an example in which the segment tail node is the node 8.

Step 202: Search the data transmission tunnel for a target tunnel segment corresponding to the segment tail node, where a tail node of the target tunnel segment is the segment tail node. Perform step 203.

In step 202, the controller may use the MSD of each node to determine the target tunnel segment corresponding to the segment tail node. It should be noted that, the MSD of each node in the data transmission system can be obtained by the controller by using a BGP-LS. In this embodiment of this application, the controller may obtain the MSD of each node before step 201, so as to use the MSD to determine the target tunnel segment corresponding to the segment tail node in step 202.

In this embodiment of this application, there are a plurality of implementations in which the controller determines the target tunnel segment by using the MSD. In this embodiment of this application, the following two implementations are used as examples for description.

(1) In one implementation, the controller may search, based on the MSD, the data transmission tunnel for at least one candidate tunnel segment corresponding to the segment tail node, and then determine that a candidate tunnel segment with a largest hop count in the at least one candidate tunnel segment is the target tunnel segment corresponding to the segment tail node.

The candidate tunnel segment needs to meet a condition that a tail node of the candidate tunnel segment is the segment tail node and that a hop count of the candidate tunnel segment is determined based on an MSD of a head node of the candidate tunnel segment. The controller may compare a hop count between the segment tail node and each upstream node of the segment tail node with an MSD of the upstream node, then select, based on comparison results, a path that meets the condition of the candidate tunnel segment from paths between the segment tail node and the plurality of upstream nodes, and determine the path as the candidate tunnel segment. The upstream node of the segment tail node refers to a node that is located preceding the segment tail node in the data transmission tunnel, and data received by the segment tail node is transmitted from the upstream node of the segment tail node.

Optionally, the hop count of the candidate tunnel segment is less than or equal to a difference between the MSD of the head node of the candidate tunnel segment and m, and correspondingly, the hop count of the target tunnel segment is also less than or equal to a difference between the MSD of the head node of the target tunnel segment and m, where 1 ≤ m < the MSD of the head node of the candidate tunnel segment. In this embodiment of this application, "m = 1" is used as an example.

For example, as shown in FIG. 2, when the segment tail node is the node 8, upstream nodes of the node 8 include the node 1 to the node 7. After comparing a hop count between the node 8 and each upstream node of the node 8 with an MSD of the upstream node, the controller may determine the following: A hop count 7 between the node 1 and the node 8 is greater than the MSD (3) of the node 1, a hop count 6 between the node 2 and the node 8 is greater than the MSD (4) of the node 2, a hop count 5 between the node 3 and the node 8 is greater than the MSD (2) of the node 3, a hop count 4 between the node 4 and the node 8 is greater than the MSD (1) of the node 4, a hop count 3 between the node 5 and the node 8 is less than the MSD (4) of the node 5, a hop count 2 between the node 6 and the node 8 is greater than the MSD (1) of the node 6, and a hop count 1 between the node 7 and the node 8 is less than the MSD (2) of the node 7. Based on the comparison results, the controller may select, from paths between the node 8 and the plurality of upstream nodes, a path that meets the condition of the candidate tunnel segment, and determine the path as the candidate tunnel segment. For example, a candidate tunnel segment 1 is a path between the node 5 and the node 8, and a candidate tunnel segment 2 is a path between the node 7 and the node 8. Because the hop count of the candidate tunnel segment 1 is 3, and the hop count of the candidate tunnel segment 2 is 1, the controller 101 may determine the candidate tunnel segment 1 as a target tunnel segment 1 (as shown in FIG. 4) corresponding to the node 8.

(2) In the other implementation, the controller may not need to search for the at least one candidate tunnel segment, but directly search an upstream node of the segment tail node for a segment head node of the target tunnel segment based on a condition that the segment head node needs to meet. Once the segment head node is found, a path between the segment head node and the segment tail node is determined as the target tunnel segment.

The segment head node needs to meet a condition that a hop count between the segment head node and the segment tail node is determined based on an MSD of the segment head node. For example, the hop count between the segment head node and the segment tail node is less than or equal to a difference between the MSD of the segment head node and n, where 1 ≤ n < the hop count between the segment head node and the segment tail node. In this embodiment of this application, "n = 1" is used as an example.

Optionally, the controller may successively determine, in ascending or descending order of hop counts between upstream nodes of the segment tail node and the segment tail node, whether each upstream node is the segment head node. Optionally, the controller may successively determine, in a random order, whether an upstream node of the segment tail node is the segment head node. A sequence of determining the segment head node from the upstream node of the segment tail node in the data transmission tunnel is not limited in this embodiment of this application.

For example, as shown in FIG. 2, the node 8 is the segment tail node, and upstream nodes of the node 8 include the node 1 to the node 7.

When the controller successively determines, in ascending order of hop counts between the upstream nodes of the node 8 and the node 8, whether each upstream node is the segment head node, the controller 101 may successively determine whether the node 7, the node 6, the node 5, ..., and the node 1 are the segment head nodes. Because the hop count between the node 7 and the node 8 is 1, and the MSD of the node 7 is 2, the controller first determines that the node 7 is the segment head node, and determines a path between the node 7 and the node 8 as the target tunnel segment corresponding to the segment tail node. In addition, after the node 7 is determined as the segment head node, the controller does not need to further determine whether the node 6, the node 5, ..., and the node 1 are the segment head nodes.

When the controller successively determines, in descending order of hop counts between the upstream nodes of the node 8 and the node 8, whether each upstream node is the segment head node, the controller may successively determine whether the node 1, the node 2, the node 3, ..., and the node 7 are the segment head nodes. For example, because the hop count between the node 1 and the node 8 is 7, and the MSD of the node 1 is 3, the controller determines that the node 1 is not the segment head node, and may continue to determine whether the node 2 is the segment head node. Because the hop count between the node 2 and the node 8 is 6, and the MSD of the node 2 is 4, the controller determines that the node 2 is not the segment head node, and may continue to determine whether the node 3 is the segment head node. Because the hop count between the node 3 and the node 8 is 5, and the MSD of the node 3 is 2, the controller determines that the node 3 is not the segment head node, and may continue to determine whether the node 4 is the segment head node. Because the hop count between the node 4 and the node 8 is 4, and the MSD of the node 4 is 1, the controller 101 determines that the node 4 is not the segment head node, and may continue to determine whether the node 5 is the segment head node. Because the hop count between the node 5 and the node 8 is 3, and the MSD of the node 5 is 4, the controller 101 determines that the node 5 is the segment head node, and determines a path between the node 5 and the node 8 as the target tunnel segment corresponding to the segment tail node. In addition, after the node 5 is determined as the segment head node, the controller does not need to further determine whether the node 6 and the node 7 are the segment head nodes.

Step 203: Check whether a head node of a newly determined target tunnel segment is a head node of the data transmission tunnel. When the head node of the newly determined target tunnel segment is not the head node of the data transmission tunnel, perform step 204. When the head node of the newly determined target tunnel segment is the head node of the data transmission tunnel, perform step 206.

In this embodiment of this application, step 203 may be performed once after step 202, and may be performed once each time step 205 is performed. If step 203 is performed after step 202 is performed, the newly determined target tunnel segment is the target tunnel segment corresponding to the segment tail node. If step 203 is performed after step 205 is performed, the newly determined target tunnel segment is a target tunnel segment corresponding to an updated segment tail node.

In step 203, the controller needs to compare the head node of the newly determined target tunnel segment with the head node of the data transmission tunnel, to determine whether the head node of the newly determined target tunnel segment is the head node of the data transmission tunnel.

When the head node of the newly determined target tunnel segment is not the head node of the data transmission tunnel, it indicates that in the data transmission tunnel, there is still a node located outside the determined target tunnel segment. In this case, the subsequent step 204 and step 205 may be repeatedly performed, to find more target tunnel segments in the paths between these nodes. When the head node of the newly determined target tunnel segment is the head node of the data transmission tunnel, it indicates that each node between the segment tail node in step 201 and the head node of the data transmission tunnel is located in the determined target tunnel segment. In this case, the subsequent step 206 may be performed.

For example, referring to FIG. 4 again, if the newly determined target tunnel segment is the target tunnel segment 1 (the path between the node 5 and the node 8), the head node of the target tunnel segment 1 is the node 5, and the head node of the data transmission tunnel is the node 1. Therefore, the head node (the node 5) of the target tunnel segment 1 is not the head node (the node 1) of the data transmission tunnel. In this case, the subsequent step 204 and step 205 may be performed.

It should be noted that, when the head node of the newly determined target tunnel segment in step 203 is not the head node of the data transmission tunnel, but the second node (for example, the node 2 in FIG. 2) in the data transmission tunnel, the controller may not need to repeatedly perform step 204 and step 205, but directly determine a path between the first node and the second node in the data transmission tunnel as a target tunnel segment, and then perform step 206.

Step 204: Use the head node of the newly determined target tunnel segment as an updated segment tail node. Perform step 205.

Step 205: Search the data transmission tunnel for a target tunnel segment corresponding to the updated segment tail node. Perform step 203.

For a process in which the controller searches the data transmission tunnel for the target tunnel segment corresponding to the updated segment tail node, refer to a process in which the controller searches the data transmission tunnel for the target tunnel segment corresponding to the segment tail node in step 202. Details are not described herein in this embodiment of this application.

Step 206: Segment the data transmission tunnel based on the found target tunnel segment.

When the head node of the target tunnel segment newly determined by the controller is the head node of the data transmission tunnel, the controller may segment the data transmission tunnel based on all the found target tunnel segments.

For example, it is assumed that the target tunnel segment found by the controller after step 201 and step 202 includes the target tunnel segment 1 (the path between the node 5 and the node 8) shown in FIG. 4. In step 203, the controller may determine that the head node of the newly determined target tunnel segment (that is, the node 5 in the target tunnel segment 1) is not the head node (the node 1) of the data transmission tunnel. Then, the controller may use the node 5 as an updated segment tail node in step 204, and search, in step 205, for a target tunnel segment corresponding to the updated segment tail node, for example, a target tunnel segment 2 (a path between the node 2 and the node 5) shown in FIG. 4.

Then, the controller may continue to perform step 203. Because the head node of the newly determined target tunnel segment (that is, the node 2 in the target tunnel segment 2) is not the head node (the node 1) of the data transmission tunnel in this case, the controller may use the node 2 as an updated segment tail node in step 204, and search, in step 205, for a target tunnel segment corresponding to the updated segment tail node, for example, a target tunnel segment 3 (a path between the node 1 and the node 2) shown in FIG. 4.

Then, the controller may continue to perform step 203. Because the head node of the newly determined target tunnel segment (that is, the node 1 in the target tunnel segment 1) is the head node (the node 1) of the data transmission tunnel in this case, the controller may perform step 206 to segment the data transmission tunnel based on all the found target tunnel segments (the target tunnel segments 1, 2, and 3 shown in FIG. 4). For example, the controller may divide the data transmission tunnel into the target tunnel segment 1, the target tunnel segment 2, and the target tunnel segment 3 shown in FIG. 4.

It should be noted that the embodiment shown in FIG. 3 is described by using an example in which the segment tail node in step 201 is a tail node (the node 8 in FIG. 2) of the data transmission tunnel. When the segment tail node in step 201 is a non-tail node (the node 3, 4, 5, 6, or 7 in FIG. 2) of the data transmission tunnel, after the head node of the newly determined target tunnel segment is determined as the head node of the data transmission tunnel in step 203, and before step 206, the controller may use a path between the segment tail node in step 201 and the tail node of the data transmission tunnel as a new data transmission tunnel, and search the new data transmission tunnel for at least one target tunnel segment in the manner from step 201 to step 205 (or in a manner of searching a data transmission tunnel for a tunnel segment in a related technology).

In a related technology, when segmenting the data transmission tunnel, the controller performs tunnel segmentation from the head node of the data transmission tunnel based on the MSD of each node. The controller obtains the first target tunnel segment based on the MSD of the head node, and a difference between the MSD of the head node and 1 is equal to a hop count of the first target tunnel segment. Then, the controller obtains the second target tunnel segment based on an MSD of a tail node of the first target tunnel segment. The tail node of the first target tunnel segment is a head node of the second target tunnel segment. In addition, a difference between the MSD of the tail node of the first target tunnel segment and 1 is equal to a hop count of the second target tunnel segment. Then, the controller continues segmentation based on the segmentation procedure, until a tail node of a newly determined target tunnel segment is the tail node of the data transmission tunnel.

However, MSDs of some nodes in the data transmission tunnel may be 0 or 1, and therefore, an MSD of the tail node of the newly determined target tunnel segment may be 0 or 1. Consequently, another target tunnel segment cannot continue to be determined subsequently. In this case, the controller needs to perform segmentation again from the first node of the data transmission tunnel. Consequently, the controller needs to repeatedly perform a segmentation process a plurality of times to segment the data transmission tunnel, so that segmentation performance of the data transmission tunnel is relatively low. In addition, for a data transmission tunnel with a large quantity of nodes, segmentation performance is lower.

In the tunnel segmentation method provided in this embodiment of this application, the controller may search the data transmission tunnel for the target tunnel segment corresponding to the segment tail node, and use the target tunnel segment as the first target tunnel segment, where the search may start from the segment tail node of the data transmission tunnel. Then, when the head node of the newly determined target tunnel segment is not the head node of the data transmission tunnel, the controller uses the head node of the newly determined target tunnel segment as an updated segment tail node, and continues to perform tunnel segmentation, until the head node of the newly determined target tunnel segment is the node 1 of the data transmission tunnel. Because the hop count of each found target tunnel segment is determined based on the MSD of the head node of the target tunnel segment, the MSD of the head node of each target tunnel segment can support a quantity of nodes in the target tunnel segment, thereby effectively avoiding a case in which an MSD of a head node of a target tunnel segment is 0 or 1 in the tunnel segmentation process. Therefore, the segmentation process needs to be performed only once on the target tunnel segment, thereby improving segmentation performance of the data transmission tunnel. In addition, for a data transmission tunnel with a relatively large quantity of nodes, segmentation performance is further improved compared with that in a related technology.

For example, if duration "n2" is required for segmenting a data transmission tunnel by using the tunnel segmentation method in the related technology, duration "n" is required for segmenting the data transmission tunnel in the tunnel segmentation method provided in this embodiment of this application. It may be learned that the segmentation duration required by the tunnel segmentation method provided in this embodiment of this application is far less than the segmentation duration required by the tunnel segmentation method in the related technology, and segmentation performance of the tunnel segmentation method provided in this embodiment of this application is far higher than segmentation performance of the tunnel segmentation method in the related technology.

In the foregoing embodiment, the controller searches the data transmission tunnel for at least one target tunnel segment in an order from the tail node to the head node of the data transmission tunnel, and then segments the data transmission tunnel based on the found target tunnel segment.

Optionally, the controller may alternatively first search the data transmission tunnel for at least one auxiliary tunnel segment in an order from the head node to the tail node of the data transmission tunnel. When an MSD of a tail node of an auxiliary tunnel segment is equal to 0 or 1, the controller may then search the data transmission tunnel for at least one target tunnel segment in an order from the tail node to the head node of the data transmission tunnel. The following embodiment uses the data transmission tunnel shown in FIG. 2 as an example to describe the method.

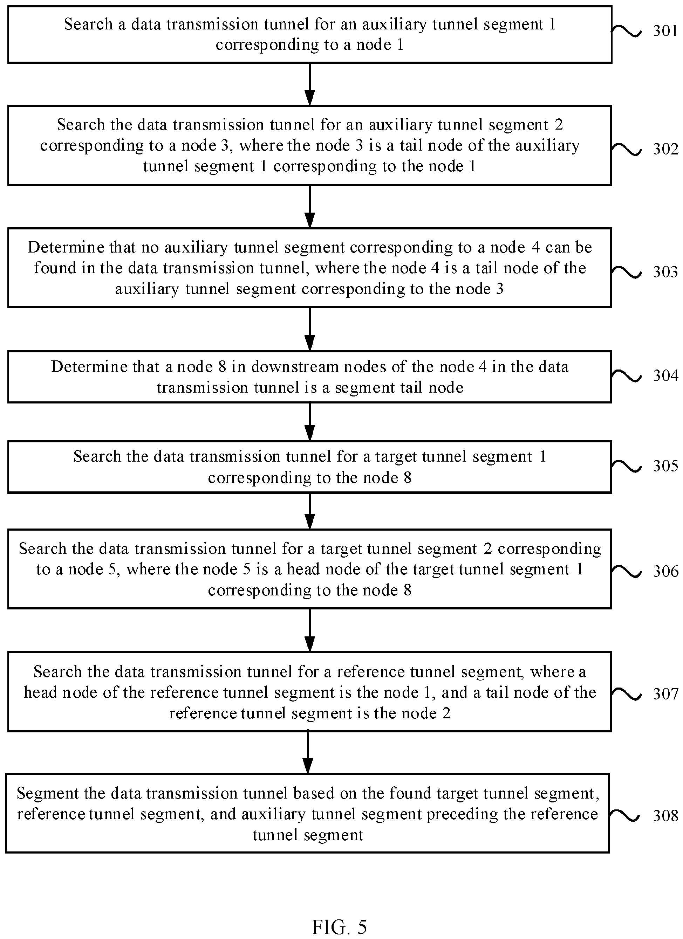

For example, FIG. 5 is a flowchart of another tunnel segmentation method according to an embodiment of this application. The method may be applied to a controller in a data transmission control system, for example, may be applied to the controller 101 shown in FIG. 1. The method is described by using an example in which a to-be-segmented tunnel is the data transmission tunnel shown in FIG. 2. As shown in FIG. 2, the data transmission tunnel includes the node 1 to the node 8, and the MSDs of the node 1 to the node 8 are 3, 4, 2, 1, 4, 1, 2, and 3 respectively. As shown in FIG. 5, the method may include the following steps.

Step 301: Search the data transmission tunnel for an auxiliary tunnel segment 1 corresponding to the node 1.

The node 1 may be an auxiliary node in the data transmission tunnel. The auxiliary node is a k^{th} node in the data transmission tunnel, where 1 ≤ k < i. An auxiliary tunnel segment corresponding to the auxiliary node meets a condition that a head node of the auxiliary tunnel segment is the auxiliary node and that a hop count of the auxiliary tunnel segment is determined based on an MSD of the auxiliary node. Optionally, the hop count of the auxiliary tunnel segment is equal to a difference between the MSD of the auxiliary node and p, where 1 ≤ p < an MSD of a head node of a candidate tunnel segment. In this embodiment of this application, "p = 1" is used as an example.

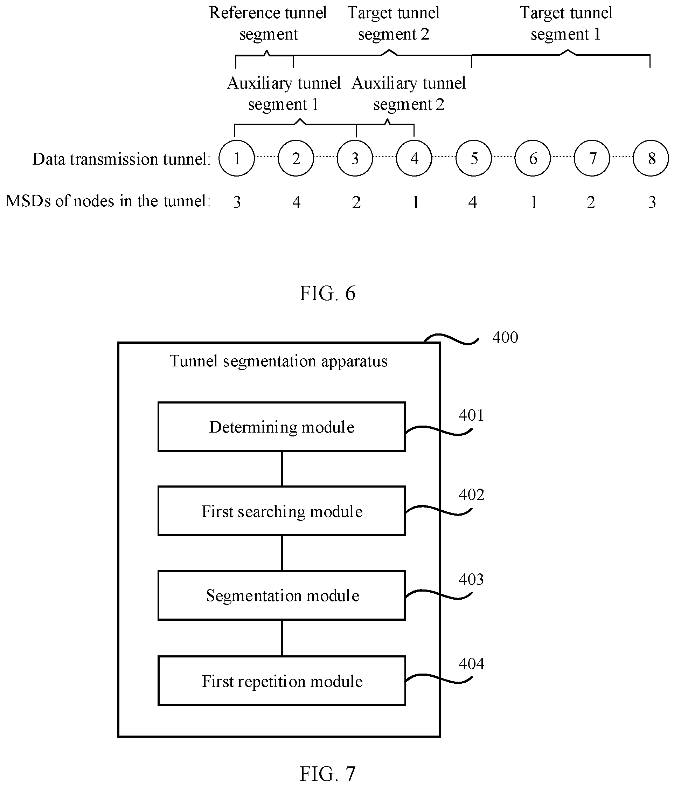

It should be noted that, because a quantity of nodes in a tunnel segment is greater than 1, the auxiliary tunnel segment corresponding to the auxiliary node can be found provided that the MSD of the auxiliary node is greater than or equal to 2. For example, in step 301, because the MSD of the node 1 is 3 (greater than 1), the controller can find, in the data transmission tunnel, the auxiliary tunnel segment 1 (as shown in FIG. 6) corresponding to the node 1.

Optionally, if the controller finds, in the data transmission tunnel, a plurality of auxiliary tunnel segments corresponding to the auxiliary node, the controller may use an auxiliary tunnel segment with a largest hop count as the auxiliary tunnel segment corresponding to the auxiliary node. For example, the auxiliary tunnel segment that corresponds to the node 1 and that is found by the controller includes an auxiliary tunnel segment (a path between the node 1 and the node 2) and another auxiliary tunnel segment (a path between the node 1 and the node 3). In this case, the controller may use the auxiliary tunnel segment (the path between the node 1 and the node 3) with a larger hop count as the auxiliary tunnel segment 1 corresponding to the node 1.

Step 302: Search the data transmission tunnel for an auxiliary tunnel segment 2 corresponding to the node 3, where the node 3 is a tail node of the auxiliary tunnel segment 1 corresponding to the node 1.

Each time the controller finds an auxiliary tunnel segment, the controller needs to check whether a tail node of the auxiliary tunnel segment is a tail node of the data transmission tunnel. If the tail node of the auxiliary tunnel segment is not the tail node of the data transmission tunnel, the controller may continue to use the tail node of the auxiliary tunnel segment as an updated auxiliary node, and search the data transmission tunnel for an auxiliary tunnel segment corresponding to the updated auxiliary node.

For example, as shown in FIG. 6, after the controller finds the auxiliary tunnel segment 1 (the path between the node 1 and the node 3) corresponding to the node 1 in step 301, the controller may determine that the tail node (the node 3) of the auxiliary tunnel segment 1 is not the tail node (the node 8) of the data transmission tunnel. In this case, the controller may use the node 3 as an updated auxiliary node, and search the data transmission tunnel for the auxiliary tunnel segment 2 corresponding to the node 3.

In addition, because the MSD of the node 3 is 2 (greater than 1), the controller can certainly find, in the data transmission tunnel, the auxiliary tunnel segment corresponding to the node 3. For a process in which the controller searches for the auxiliary tunnel segment corresponding to the node 3, refer to a process of searching for the auxiliary tunnel segment corresponding to the node 1. Details are not described herein in this embodiment of this application. For example, the auxiliary tunnel segment that corresponds to the node 3 and that is found by the controller includes the auxiliary tunnel segment 2 (a path between the node 3 and the node 4).

Step 303: Determine that no auxiliary tunnel segment corresponding to the node 4 can be found in the data transmission tunnel, where the node 4 is a tail node of the auxiliary tunnel segment corresponding to the node 3.

After the controller finds the auxiliary tunnel segment (the path between the node 3 and the node 4) corresponding to the node 3 in step 302, the controller may determine that the tail node (the node 4) of the auxiliary tunnel segment is not the tail node (the node 8) of the data transmission tunnel. In this case, the controller may use the node 4 as an updated auxiliary node, and search the data transmission tunnel for an auxiliary tunnel segment corresponding to the node 4.

In addition, because the MSD of the node 4 is 1 (not greater than 1), the controller cannot find, in the data transmission tunnel, the auxiliary tunnel segment corresponding to the node 3. For a process in which the controller searches for the auxiliary tunnel segment corresponding to the node 4, refer to a process of searching for the auxiliary tunnel segment corresponding to the node 1. Details are not described herein in this embodiment of this application.

Step 304: Determine that the node 8 in downstream nodes of the node 4 in the data transmission tunnel is a segment tail node.

When the controller cannot find, in the data transmission tunnel, an auxiliary tunnel segment corresponding to a node (the auxiliary node, or any updated auxiliary node, such as the node 4), the controller may determine the segment tail node from a downstream node (for example, the node 5, 6, 7, or 8) of the node. This embodiment of this application is described by using an example in which the node 8 is determined as the segment tail node.

Step 305: Search the data transmission tunnel for a target tunnel segment 1 corresponding to the node 8.

For this step, refer to step 202. Details are not described herein in this embodiment of this application. For example, the target tunnel segment that corresponds to the node 8 and that is found by the controller is the target tunnel segment 1 (a path between the node 5 and the node 8) shown in FIG. 6.

Step 306: Search the data transmission tunnel for a target tunnel segment 2 corresponding to the node 5, where the node 5 is a head node of the target tunnel segment 1 corresponding to the node 8.

It should be noted that each time the controller finds a target tunnel segment, if at least one auxiliary tunnel segment exists in the data transmission tunnel, the controller needs to check whether a head node of the target tunnel segment is located in the at least one auxiliary tunnel segment.

On one hand, if the head node of the target tunnel segment is located outside the at least one auxiliary tunnel segment, the controller may use the head node of the target tunnel segment as an updated segment tail node, and search the data transmission tunnel for a target tunnel segment corresponding to the updated segment tail node.

On the other hand, when the head node of the newly determined target tunnel segment is located in any auxiliary tunnel segment, if the head node is not a head node or a tail node of the auxiliary tunnel segment, the controller needs to search the data transmission tunnel for a reference tunnel segment. A head node of the reference tunnel segment is the head node of the auxiliary tunnel segment, and a tail node of the reference tunnel segment is the head node of the newly determined target tunnel segment.

For example, as shown in FIG. 6, after the controller finds the target tunnel segment 1 (the path between the node 5 and the node 8) corresponding to the node 8 in step 305, because the auxiliary tunnel segment 1 corresponding to the node 1 and the auxiliary tunnel segment 2 corresponding to the node 3 exist in the data transmission tunnel, the controller needs to determine whether the head node (the node 5) of the target tunnel segment 1 corresponding to the node 8 is located in the two auxiliary tunnel segments. It may be learned, through determining, that the node 5 is located outside the two auxiliary tunnel segments. Therefore, in this case, the controller may use the node 5 as an updated segment tail node, and search the data transmission tunnel for the target tunnel segment 2 corresponding to the node 5. For this searching process, refer to step 202. Details are not described herein in this embodiment of this application. For example, the target tunnel segment that corresponds to the node 5 and that is found by the controller is the target tunnel segment 2 (a path between the node 2 and the node 5) shown in FIG. 6.

Step 307: Search the data transmission tunnel for a reference tunnel segment, where a head node of the reference tunnel segment is the node 1, and a tail node of the reference tunnel segment is the node 2.

As shown in FIG. 6, after the controller finds the target tunnel segment 2 (the path between the node 2 and the node 5) corresponding to the node 5 in step 306, because the data transmission tunnel includes the auxiliary tunnel segment 1 corresponding to the node 1 and the auxiliary tunnel segment 2 corresponding to the node 3, the controller needs to determine whether a head node (the node 2) of the target tunnel segment 2 corresponding to the node 5 is located in the two auxiliary tunnel segments. It may be learned, through determining, that the node 2 is located in the auxiliary tunnel segment 1, and is not a head node (the node 1) or the tail node (the node 3) of the auxiliary tunnel segment 1. Therefore, in this case, the controller needs to search the data transmission tunnel for the reference tunnel segment. For example, as shown in FIG. 6, the head node of the reference tunnel segment is the head node (the node 1) of the auxiliary tunnel segment 1, and the tail node of the reference tunnel segment is the head node (the node 2) of the target tunnel segment 2.

Step 308: Segment the data transmission tunnel based on the found target tunnel segment, reference tunnel segment, and auxiliary tunnel segment preceding the reference tunnel segment.

As shown in FIG. 6, in step 301 to step 307, the found target tunnel segment includes the target tunnel segment 1 (the path between the node 5 and the node 8) corresponding to the node 8, and the target tunnel segment 2 (the path between the node 2 and the node 5) corresponding to the node 5. The found reference tunnel segment is the path between node 1 and node 2. The found auxiliary tunnel segment includes the auxiliary tunnel segment 1 (the path between the node 1 and the node 3) corresponding to the node 1, and the auxiliary tunnel segment 2 (the path between the node 3 and the node 4) corresponding to the node 3. These auxiliary tunnel segments do not include an auxiliary tunnel segment located preceding the reference tunnel segment.

When segmenting the data transmission tunnel based on the found target tunnel segment, reference tunnel segment, and auxiliary tunnel segment preceding the reference tunnel segment, the controller may divide the data transmission tunnel into the reference tunnel segment, the target tunnel segment 1, and the target tunnel segment 2. Optionally, if an auxiliary tunnel segment located preceding the reference tunnel segment exists in the determined auxiliary tunnel segments, the controller may divide the data transmission tunnel into at least one auxiliary tunnel segment located preceding the reference tunnel segment, the reference tunnel segment, the target tunnel segment 1, and the target tunnel segment 2.

It should be noted that the embodiment shown in FIG. 3 is described by using an example in which the head node of the newly determined target tunnel segment is located in the auxiliary tunnel segment and is not the head node or the tail node of the auxiliary tunnel segment.

Optionally, if the head node of the newly determined target tunnel segment is located in the auxiliary tunnel segment, and the head node of the target tunnel segment is the tail node of the auxiliary tunnel segment, the controller may directly segment the data transmission tunnel based on the found target tunnel segment and auxiliary tunnel segment. For example, the data transmission tunnel is divided into the found target tunnel segment and auxiliary tunnel segment.

Optionally, if a head node of a newly determined target tunnel segment is located in the auxiliary tunnel segment, and the head node of the target tunnel segment is the head node of the auxiliary tunnel segment, the controller may directly segment the data transmission tunnel based on the found target tunnel segment and auxiliary tunnel segment located preceding the target tunnel segment. For example, the data transmission tunnel is divided into the found target tunnel segment and auxiliary tunnel segment located preceding the target tunnel segment.

Optionally, if the controller cannot find the auxiliary tunnel segment in the data transmission tunnel, the controller may directly perform step 304. In addition, because the data transmission tunnel does not include the auxiliary tunnel segment in this case, after step 304, the controller may segment the data transmission tunnel with reference to step 202 to step 206. Details are not described herein in this embodiment of this application.

In conclusion, according to the tunnel segmentation method provided in the embodiments of this application, the controller may first determine the segment tail node in the data transmission tunnel, then search the data transmission tunnel for the target tunnel segment corresponding to the segment tail node, and segment the data transmission tunnel based on the target tunnel segment corresponding to the segment tail node. Because the hop count of the target tunnel segment is determined based on the MSD of the head node of the target tunnel segment, it is ensured that the head node of the target tunnel segment can support a length of a label stack corresponding to the tunnel segment, thereby improving an effect of tunnel segmentation.

A sequence of the method provided in the embodiments of this application may be properly adjusted, and a step may also be correspondingly added or deleted based on a situation. Any varied method readily figured out by a person skilled in the art within the technical scope disclosed in this application shall fall within the protection scope of this application. This is not limited in this embodiment of this application.

FIG. 7 is a schematic diagram of a structure of a tunnel segmentation apparatus according to an embodiment of this application. As shown in FIG. 7, the tunnel segmentation apparatus 400 includes:
a determining module 401, configured to determine a segment tail node in a data transmission tunnel, where the data transmission tunnel includes i nodes, the segment tail node is a j^{th} node in the data transmission tunnel, and 3≤j≤i;
a first searching module 402, configured to search the data transmission tunnel for a target tunnel segment corresponding to the segment tail node, where a tail node of the target tunnel segment is the segment tail node, and a hop count of the target tunnel segment is determined based on a maximum segment identifier depth MSD of a head node of the target tunnel segment; and
a segmentation module 403, configured to segment the data transmission tunnel based on the target tunnel segment corresponding to the segment tail node.

In conclusion, in the tunnel segmentation apparatus provided in this embodiment of this application, the determining module may first determine the segment tail node in the data transmission tunnel, then the first searching module searches the data transmission tunnel for the target tunnel segment corresponding to the segment tail node, and the segmentation module segments the data transmission tunnel based on the target tunnel segment corresponding to the segment tail node. Because the hop count of the target tunnel segment is determined based on the MSD of the head node of the target tunnel segment, it is ensured that the head node of the target tunnel segment can support a length of a label stack corresponding to the tunnel segment, thereby improving an effect of tunnel segmentation.

Optionally, the hop count of the target tunnel segment is less than or equal to a difference between the MSD of the head node of the target tunnel segment and 1.

Optionally, the first searching module 402 is configured to: search the data transmission tunnel for at least one candidate tunnel segment corresponding to the segment tail node, where a tail node of the candidate tunnel segment is the segment tail node, and a hop count of the candidate tunnel segment is determined based on a maximum segment identifier depth MSD of a head node of the candidate tunnel segment; and determine that a candidate tunnel segment with a largest hop count in the at least one candidate tunnel segment is the target tunnel segment corresponding to the segment tail node.

Optionally, the hop count of the candidate tunnel segment is less than or equal to a difference between the MSD of the head node of the candidate tunnel segment and 1.

Optionally, the determining module 401 is configured to determine a tail node of the data transmission tunnel as the segment tail node.

Optionally, as shown in FIG. 7, the tunnel segmentation apparatus further includes:
a first repetition module 404, configured to: when a head node of a newly determined target tunnel segment is not a head node of the data transmission tunnel, repeatedly perform steps of using the head node of the newly determined target tunnel segment as an updated segment tail node and searching the data transmission tunnel for a target tunnel segment corresponding to the updated segment tail node.

The segmentation module 403 is configured to segment the data transmission tunnel based on the found target tunnel segment.

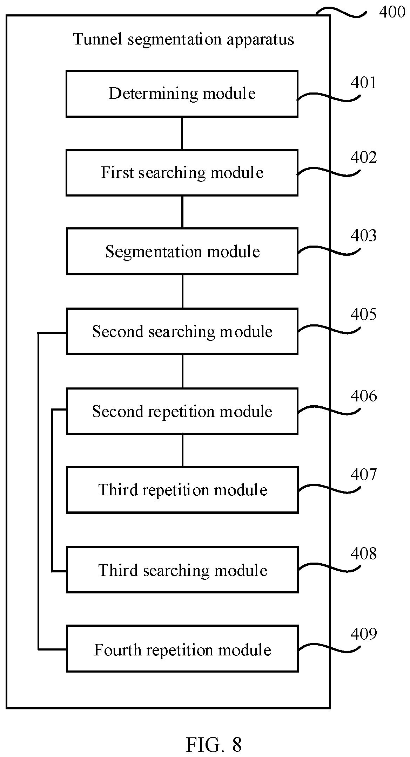

FIG. 8 is a schematic diagram of a structure of another tunnel segmentation apparatus according to an embodiment of this application. As shown in FIG. 8, in addition to including the determining module 401, the first searching module 402, and the segmentation module 403 in FIG. 7, the tunnel segmentation apparatus further includes:
a second searching module 405, configured to search the data transmission tunnel for an auxiliary tunnel segment corresponding to an auxiliary node, where the auxiliary node is a k^{th} node in the data transmission tunnel, 1 ≤ k < i, a head node of the auxiliary tunnel segment is the auxiliary node, and a hop count of the auxiliary tunnel segment is determined based on an MSD of the auxiliary node; and
a second repetition module 406, configured to: when the auxiliary tunnel segment corresponding to the auxiliary node is found, if a tail node of a newly found auxiliary tunnel segment is not the tail node of the data transmission tunnel, repeatedly perform steps of using the tail node of the newly determined auxiliary tunnel segment as an updated auxiliary node and searching the data transmission tunnel for an auxiliary tunnel segment corresponding to the updated auxiliary node.

The determining module 401 is configured to: when no auxiliary tunnel segment corresponding to the auxiliary node is found, determine the segment tail node from a downstream node of the auxiliary node in the data transmission tunnel; and when no auxiliary tunnel segment corresponding to any updated auxiliary node is found, determine the segment tail node from a downstream node of the any updated auxiliary node in the data transmission tunnel.

Optionally, a hop count of the auxiliary tunnel segment is less than or equal to a difference between the maximum segment identifier depth MSD of the auxiliary node and 1.

Optionally, referring to FIG. 8 again, the tunnel segmentation apparatus further includes:
a third repetition module 407, configured to: when at least one auxiliary tunnel segment exists in the data transmission tunnel, if a head node of a newly determined target tunnel segment is located outside the at least one auxiliary tunnel segment, repeatedly perform steps of using the head node of the newly determined target tunnel segment as an updated segment tail node and searching the data transmission tunnel for a target tunnel segment corresponding to the updated segment tail node; and
a third searching module 408, configured to: when the head node of the newly determined target tunnel segment is located in any auxiliary tunnel segment, if the head node of the newly determined target tunnel segment is not a head node or a tail node of the any auxiliary tunnel segment, search the data transmission tunnel for a reference tunnel segment, where a head node of the reference tunnel segment is the head node of the any auxiliary tunnel segment, and a tail node of the reference tunnel segment is the head node of the newly determined target tunnel segment.

The segmentation module 403 is configured to: when the reference tunnel segment is found, segment the data transmission tunnel based on the found target tunnel segment, reference tunnel segment, and auxiliary tunnel segment preceding the reference tunnel segment.

Optionally, the segmentation module 403 is further configured to: when the head node of the newly determined target tunnel segment is located in the any auxiliary tunnel segment and the head node of the newly determined target tunnel segment is the head node of the any auxiliary tunnel segment, segment the data transmission tunnel based on the found target tunnel segment and auxiliary tunnel segment preceding the target tunnel segment; or when the head node of the newly determined target tunnel segment is located in the any auxiliary tunnel segment and the head node of the newly determined target tunnel segment is the tail node of the any auxiliary tunnel segment, segment the data transmission tunnel based on the found target tunnel segment and auxiliary tunnel segment.

Optionally, the tunnel segmentation apparatus shown in FIG. 8 further includes:
a fourth repetition module 409, configured to: when no auxiliary tunnel segment exists in the data transmission tunnel, if the head node of the newly determined target tunnel segment is not the head node of the data transmission tunnel, repeatedly perform the steps of using the head node of the newly determined target tunnel segment as an updated segment tail node and searching the data transmission tunnel for a target tunnel segment corresponding to the updated segment tail node.

The segmentation module 403 is configured to segment the data transmission tunnel based on the found target tunnel segment.

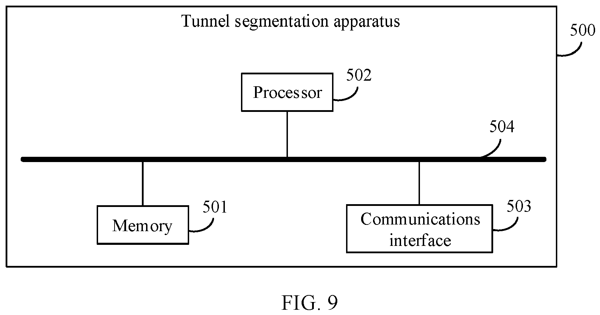

The tunnel segmentation method provided in the embodiments of this application may be applied to a tunnel segmentation apparatus (the tunnel segmentation apparatus may be applied to the foregoing controller). FIG. 9 is a schematic diagram of a structure of a tunnel segmentation apparatus according to an embodiment of this application. The tunnel segmentation apparatus 500 may include a memory 501 and a processor 502. The memory 501 stores a program. The processor 502 is configured to execute the program stored in the memory 501, to implement the tunnel segmentation method provided in the embodiments of this application (the tunnel segmentation method as shown in FIG. 3 or FIG. 5). Optionally, the tunnel segmentation apparatus may further include at least one communications interface 503 (one communications interface is shown in FIG. 9) and at least one communications bus 504 (one communications bus is shown in FIG. 9). The communications interface 503 is configured to communicate with another storage apparatus or a network apparatus. The memory 501 and the communications interface 503 are separately connected to the processor 502 by using the communications bus 504.

It should be noted that mutual reference may be made to the method embodiments provided in the embodiments of this application and the corresponding apparatus embodiments. This is not limited in the embodiments of this application. A sequence of the steps of the method embodiments provided in the embodiments of this application can be properly adjusted, and the steps can be correspondingly added or deleted based on a situation. Any method that can be easily figured out by a person skilled in the art without departing from a technical scope disclosed in this application shall fall within the protection scope of this application, and therefore details are not described again.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

The foregoing descriptions are merely optional embodiments of this application, but are not intended to limit this application. Any modification, equivalent replacement, improvement, or the like made without departing from the spirit and principle of this application shall fall within the protection scope of this application. In this application, the terms "first", "second", and the like are merely intended for description, and shall not be understood as an indication or implication of relative importance. The term "at least one" means one or more, and the term "a plurality of" means two or more, unless expressly limited otherwise.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A tunnel segmentation method, wherein the method comprises:
determining a segment tail node in a data transmission tunnel, wherein the data transmission tunnel comprises i nodes, the segment tail node is a j^{th} node in the data transmission tunnel, and 3 ≤ j ≤ i;
searching the data transmission tunnel for a target tunnel segment corresponding to the segment tail node, wherein a tail node of the target tunnel segment is the segment tail node, and a hop count of the target tunnel segment is determined based on a maximum segment identifier depth MSD of a head node of the target tunnel segment; and
segmenting the data transmission tunnel based on the target tunnel segment corresponding to the segment tail node.

2. The method according to claim 1, wherein the hop count of the target tunnel segment is less than or equal to a difference between the MSD of the head node of the target tunnel segment and 1.

3. The method according to claim 1 or 2, wherein the searching the data transmission tunnel for a target tunnel segment corresponding to the segment tail node comprises:
searching the data transmission tunnel for at least one candidate tunnel segment corresponding to the segment tail node, wherein a tail node of the candidate tunnel segment is the segment tail node, and a hop count of the candidate tunnel segment is determined based on an MSD of a head node of the candidate tunnel segment; and
determining that a candidate tunnel segment with a largest hop count in the at least one candidate tunnel segment is the target tunnel segment corresponding to the segment tail node.

4. The method according to claim 3, wherein the hop count of the candidate tunnel segment is less than or equal to a difference between the MSD of the head node of the candidate tunnel segment and 1.

5. The method according to any one of claims 1 to 4, wherein the determining a segment tail node in a data transmission tunnel comprises:
determining a tail node of the data transmission tunnel as the segment tail node.

6. The method according to any one of claims 1 to 5, wherein after the searching the data transmission tunnel for a target tunnel segment corresponding to the segment tail node, the method further comprises:
when a head node of a newly determined target tunnel segment is not a head node of the data transmission tunnel, repeatedly performing steps of using the head node of the newly determined target tunnel segment as an updated segment tail node and searching the data transmission tunnel for a target tunnel segment corresponding to the updated segment tail node; and
the segmenting the data transmission tunnel based on the target tunnel segment corresponding to the segment tail node comprises:
segmenting the data transmission tunnel based on the found target tunnel segment.

7. The method according to any one of claims 1 to 5, wherein before the determining a segment tail node in a data transmission tunnel, the method further comprises:
searching the data transmission tunnel for an auxiliary tunnel segment corresponding to an auxiliary node, wherein the auxiliary node is a k^{th} node in the data transmission tunnel, 1 ≤ k < i, a head node of the auxiliary tunnel segment is the auxiliary node, and a hop count of the auxiliary tunnel segment is determined based on an MSD of the auxiliary node; and
when the auxiliary tunnel segment corresponding to the auxiliary node is found, if a tail node of a newly found auxiliary tunnel segment is not the tail node of the data transmission tunnel, repeatedly performing steps of using the tail node of the newly determined auxiliary tunnel segment as an updated auxiliary node and searching the data transmission tunnel for an auxiliary tunnel segment corresponding to the updated auxiliary node; and
the determining a segment tail node in a data transmission tunnel comprises:
when no auxiliary tunnel segment corresponding to the auxiliary node is found, determining the segment tail node from a downstream node of the auxiliary node in the data transmission tunnel; and
when no auxiliary tunnel segment corresponding to any updated auxiliary node is found, determining the segment tail node from a downstream node of the any updated auxiliary node in the data transmission tunnel.

8. The method according to claim 7, wherein the hop count of the auxiliary tunnel segment is less than or equal to a difference between the MSD of the auxiliary node and 1.

9. The method according to claim 7 or 8, wherein after the searching the data transmission tunnel for a target tunnel segment corresponding to the segment tail node, the method further comprises:
when at least one auxiliary tunnel segment exists in the data transmission tunnel, if a head node of a newly determined target tunnel segment is located outside the at least one auxiliary tunnel segment, repeatedly performing steps of using the head node of the newly determined target tunnel segment as an updated segment tail node and searching the data transmission tunnel for a target tunnel segment corresponding to the updated segment tail node; or
when the head node of the newly determined target tunnel segment is located in any auxiliary tunnel segment, if the head node of the newly determined target tunnel segment is not a head node or a tail node of the any auxiliary tunnel segment, searching the data transmission tunnel for a reference tunnel segment, wherein a head node of the reference tunnel segment is the head node of the any auxiliary tunnel segment, and a tail node of the reference tunnel segment is the head node of the newly determined target tunnel segment; and
the segmenting the data transmission tunnel based on the target tunnel segment corresponding to the segment tail node comprises:
when the reference tunnel segment is found, segmenting the data transmission tunnel based on the found target tunnel segment, reference tunnel segment, and auxiliary tunnel segment preceding the reference tunnel segment.

10. The method according to claim 9, wherein the segmenting the data transmission tunnel based on the target tunnel segment corresponding to the segment tail node further comprises:
when the head node of the newly determined target tunnel segment is located in the any auxiliary tunnel segment and the head node of the newly determined target tunnel segment is the head node of the any auxiliary tunnel segment, segmenting the data transmission tunnel based on the found target tunnel segment and auxiliary tunnel segment preceding the target tunnel segment; or
when the head node of the newly determined target tunnel segment is located in the any auxiliary tunnel segment and the head node of the newly determined target tunnel segment is the tail node of the any auxiliary tunnel segment, segmenting the data transmission tunnel based on the found target tunnel segment and auxiliary tunnel segment.

11. The method according to any one of claims 7 to 10, wherein after the searching the data transmission tunnel for a target tunnel segment corresponding to the segment tail node, the method further comprises:
when no auxiliary tunnel segment exists in the data transmission tunnel, if the head node of the newly determined target tunnel segment is not the head node of the data transmission tunnel, repeatedly performing the steps of using the head node of the newly determined target tunnel segment as an updated segment tail node and searching the data transmission tunnel for a target tunnel segment corresponding to the updated segment tail node; and
the segmenting the data transmission tunnel based on the target tunnel segment corresponding to the segment tail node comprises:
segmenting the data transmission tunnel based on the found target tunnel segment.

12. A tunnel segmentation apparatus, wherein the tunnel segmentation apparatus comprises:
a determining module, configured to determine a segment tail node in a data transmission tunnel, wherein the data transmission tunnel comprises i nodes, the segment tail node is a j^{th} node in the data transmission tunnel, and 3 ≤ j ≤ i;
a first searching module, configured to search the data transmission tunnel for a target tunnel segment corresponding to the segment tail node, wherein a tail node of the target tunnel segment is the segment tail node, and a hop count of the target tunnel segment is determined based on a maximum segment identifier depth MSD of a head node of the target tunnel segment; and
a segmentation module, configured to segment the data transmission tunnel based on the target tunnel segment corresponding to the segment tail node.

13. The tunnel segmentation apparatus according to claim 12, wherein the hop count of the target tunnel segment is less than or equal to a difference between the MSD of the head node of the target tunnel segment and 1.

14. The tunnel segmentation apparatus according to claim 12 or 13, wherein the first searching module is configured to:
search the data transmission tunnel for at least one candidate tunnel segment corresponding to the segment tail node, wherein a tail node of the candidate tunnel segment is the segment tail node, and a hop count of the candidate tunnel segment is determined based on an MSD of a head node of the candidate tunnel segment; and
determine that a candidate tunnel segment with a largest hop count in the at least one candidate tunnel segment is the target tunnel segment corresponding to the segment tail node.

15. The tunnel segmentation apparatus according to claim 14, wherein the hop count of the candidate tunnel segment is less than or equal to a difference between the MSD of the head node of the candidate tunnel segment and 1.

16. The tunnel segmentation apparatus according to any one of claims 12 to 15, wherein the determining module is configured to:
determine a tail node of the data transmission tunnel as the segment tail node.

17. The tunnel segmentation apparatus according to any one of claims 12 to 16, wherein the tunnel segmentation apparatus further comprises:
a first repetition module, configured to: when a head node of a newly determined target tunnel segment is not a head node of the data transmission tunnel, repeatedly perform steps of using the head node of the newly determined target tunnel segment as an updated segment tail node and searching the data transmission tunnel for a target tunnel segment corresponding to the updated segment tail node; and
the segmentation module is configured to:
segment the data transmission tunnel based on the found target tunnel segment.

18. The tunnel segmentation apparatus according to any one of claims 12 to 16, wherein the tunnel segmentation apparatus further comprises:
a second searching module, configured to search the data transmission tunnel for an auxiliary tunnel segment corresponding to an auxiliary node, wherein the auxiliary node is a k^{th} node in the data transmission tunnel, 1 ≤ k < i, a head node of the auxiliary tunnel segment is the auxiliary node, and a hop count of the auxiliary tunnel segment is determined based on an MSD of the auxiliary node; and
a second repetition module, configured to: when the auxiliary tunnel segment corresponding to the auxiliary node is found, if a tail node of a newly found auxiliary tunnel segment is not the tail node of the data transmission tunnel, repeatedly perform steps of using the tail node of the newly determined auxiliary tunnel segment as an updated auxiliary node and searching the data transmission tunnel for an auxiliary tunnel segment corresponding to the updated auxiliary node; and
the determining module is configured to:
when no auxiliary tunnel segment corresponding to the auxiliary node is found, determine the segment tail node from a downstream node of the auxiliary node in the data transmission tunnel; and
when no auxiliary tunnel segment corresponding to any updated auxiliary node is found, determine the segment tail node from a downstream node of the any updated auxiliary node in the data transmission tunnel.

19. The tunnel segmentation apparatus according to claim 18, wherein the hop count of the auxiliary tunnel segment is less than or equal to a difference between the MSD of the auxiliary node and 1.

20. The tunnel segmentation apparatus according to claim 18 or 19, wherein the tunnel segmentation apparatus further comprises:
a third repetition module, configured to: when at least one auxiliary tunnel segment exists in the data transmission tunnel, if a head node of a newly determined target tunnel segment is located outside the at least one auxiliary tunnel segment, repeatedly perform steps of using the head node of the newly determined target tunnel segment as an updated segment tail node and searching the data transmission tunnel for a target tunnel segment corresponding to the updated segment tail node; and
a third searching module, configured to: when the head node of the newly determined target tunnel segment is located in any auxiliary tunnel segment, if the head node of the newly determined target tunnel segment is not a head node or a tail node of the any auxiliary tunnel segment, search the data transmission tunnel for a reference tunnel segment, wherein a head node of the reference tunnel segment is the head node of the any auxiliary tunnel segment, and a tail node of the reference tunnel segment is the head node of the newly determined target tunnel segment; and
the segmentation module is configured to:
when the reference tunnel segment is found, segment the data transmission tunnel based on the found target tunnel segment, reference tunnel segment, and auxiliary tunnel segment preceding the reference tunnel segment.

21. The tunnel segmentation apparatus according to claim 20, wherein the segmentation module is further configured to:
when the head node of the newly determined target tunnel segment is located in the any auxiliary tunnel segment and the head node of the newly determined target tunnel segment is the head node of the any auxiliary tunnel segment, segment the data transmission tunnel based on the found target tunnel segment and auxiliary tunnel segment preceding the target tunnel segment; or
when the head node of the newly determined target tunnel segment is located in the any auxiliary tunnel segment and the head node of the newly determined target tunnel segment is the tail node of the any auxiliary tunnel segment, segment the data transmission tunnel based on the found target tunnel segment and auxiliary tunnel segment.

22. The tunnel segmentation apparatus according to any one of claims 18 to 21, wherein the tunnel segmentation apparatus further comprises:
a fourth repetition module, configured to: when no auxiliary tunnel segment exists in the data transmission tunnel, if the head node of the newly determined target tunnel segment is not the head node of the data transmission tunnel, repeatedly perform the steps of using the head node of the newly determined target tunnel segment as an updated segment tail node and searching the data transmission tunnel for a target tunnel segment corresponding to the updated segment tail node; and
the segmentation module is configured to:
segment the data transmission tunnel based on the found target tunnel segment.

23. A tunnel segmentation apparatus, wherein the tunnel segmentation apparatus comprises a processor and a memory, the memory stores a program, and the processor is configured to execute the program stored in the memory, to implement the tunnel segmentation method according to any one of claims 1 to 11.

24. A computer storage medium, wherein the storage medium stores a computer program, and when the computer program is executed by a processor, the tunnel segmentation method according to any one of claims 1 to 11 is implemented.

25. A data transmission system, wherein the data transmission system comprises a controller and a plurality of nodes, the controller comprises the tunnel segmentation apparatus according to any one of claims 12 to 22, or the controller comprises the tunnel segmentation apparatus according to claim 23.
